# EUROPEAN PATENT APPLICATION

(11) **EP 4 485 152 A1**
(43) Date of publication of application: **01.01.2025**
(21) Application number: 23795115.7
(22) Date of filing: 18.04.2023
(51) Int. Cl.: G06F 3/023

(54) **TEXT EDITING METHOD AND ELECTRONIC DEVICE**

(30) Priority: 26.04.2022 CN 202210446912
(71) Applicant: Huawei Technologies Co., Ltd., Shenzhen, Guangdong 518129 (CN)
(72) Inventor: BIAN, Sucheng, Shenzhen, Guangdong 518129 (CN); XU, Liang, Shenzhen, Guangdong 518129 (CN); DING, Ning, Shenzhen, Guangdong 518129 (CN); LI, Yinghao, Shenzhen, Guangdong 518129 (CN)
(74) Representative: Goddar, Heinz J.
(86) International application number: PCT/CN2023/089051
(87) International publication number: WO 2023/207682

(57) **Abstract**

This application provides a text editing method and an electronic device, applied to a real-time recording-to-text transcription scenario. In the method, the electronic device may detect whether there are a plurality of input focuses, in other words, whether there is an editing input focus other than a voice input focus. Then, when it is determined that there are a plurality of input focuses, a transcribed text is edited in response to an editing operation, so that text editing can be performed while real-time recording-to-text transcription is performed. This can improve text editing efficiency and improve user experience.

## Description

### CROSS-REFERENCE TO RELATED APPLICATIONS

This application claims priority to Chinese Patent Application No. 202210446912.6, filed with the China National Intellectual Property Administration on April 26, 2022 and entitled "TEXT EDITING METHOD AND ELECTRONIC DEVICE", which is incorporated herein by reference in its entirety.

### TECHNICAL FIELD

This application relates to the field of terminal technologies, and in particular, to a text editing method and an electronic device.

### BACKGROUND

A recording function is a common function of a terminal device. A user may use the function in a scenario such as a class, a meeting, or an interview, to arrange content of a recording subsequently.

Currently, a text of the recording may be edited in the following two manners:
Manner 1: The user uses recording software or a recording pen to complete recording, then transcribes the recording into a text after the recording is completed, and finally checks whether a sound is consistent with content of the text and edits inconsistent content.
Manner 2: The user may use recording-to-text transcription software (for example, the Sogou recording assistant) to transcribe a real-time voice into a text. However, in this manner, the transcribed text can be edited only after recording ends. To be specific, if an error is found in the transcribed text in a recording process, the transcribed text cannot be modified.

In other words, text editing efficiency of recording-to-text transcription in the foregoing two manners is low.

### SUMMARY

This application provides a text editing method and an electronic device, to improve text editing efficiency of recording-to-text transcription and improve user experience.

According to a first aspect, this application provides a text editing method. The method may be applied to a real-time recording-to-text transcription scenario. Specifically, the method may include: An electronic device collects voice signals in real time. The electronic device displays a first interface, where the first interface includes a first text and a second text, the first text is a text that is transcribed from a voice signal by artificial intelligence AI and on which semantic correction is completed by the AI, the second text is a text on which semantic correction is not completed by the AI, and collection time of a voice signal corresponding to the second text is later than collection time of the voice signal corresponding to the first text. The electronic device determines that an editing input focus exists in the first text or the second text. The electronic device detects an editing operation for the first text or the second text, and edits the first text or the second text in response to the editing operation.

It should be understood that the "first text" has a same meaning as a "first-type text" in the following embodiment, and the "second text" has a same meaning as a "second-type text" in the following embodiment.

According to the foregoing technical solution, when an editing input focus other than a voice signal input focus exists on an interface of recording-to-text transcription, the electronic device can perform, in response to the editing operation of a user, text editing while performing real-time recording-to-text transcription. This improves text editing efficiency and improves user experience.

In a possible design, the method further includes: The electronic device detects a first operation. The electronic device displays a second interface in response to the first operation. The second interface includes the second text, a virtual keyboard, and a recording bar. The second text is displayed below the recording bar, the second text is embedded and displayed in the recording bar, or the second text is displayed above the virtual keyboard.

According to the foregoing technical solution, when the user triggers displaying of the virtual keyboard, the electronic device may adjust a location of the second text, to be specific, adjust the second text from being displayed after the first text to being displayed below the recording bar, embedded in the recording bar, or displayed above the virtual keyboard. In this way, the user can view a transcription status in real time by using the second text, and user experience can be improved.

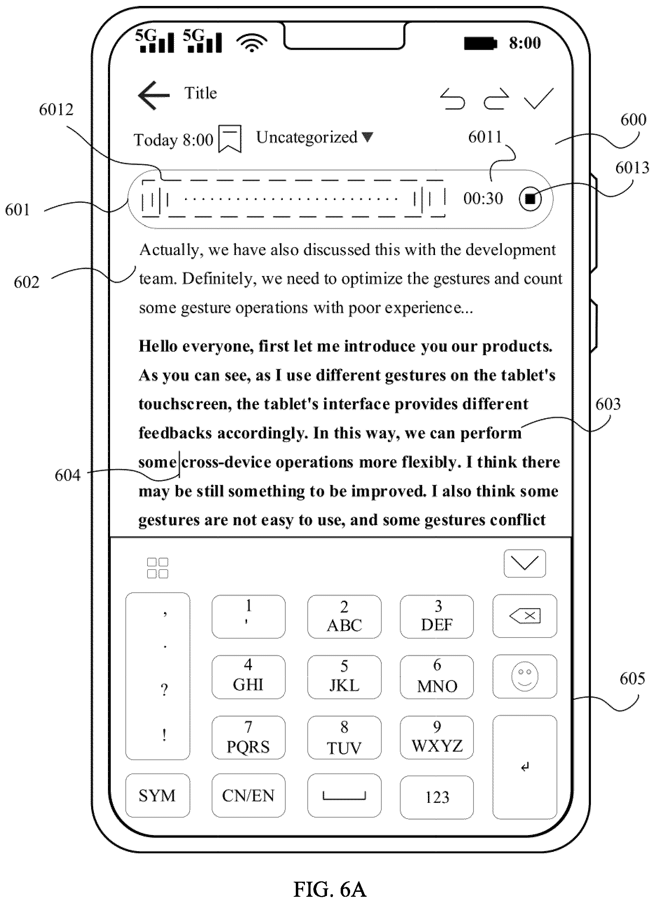

For example, the first operation may be a tap operation at a location of a cursor in the diagram shown in FIG. 6A. After the first operation is performed, the cursor in the diagram shown in FIG. 6A may be displayed, and a virtual keyboard 605 may be displayed.

In a possible design, the method further includes: The electronic device displays a third interface when detecting that the second text goes beyond the first interface, where the third interface includes the first text, the second text, and a recording bar. The second text is displayed below the recording bar, the second text is embedded and displayed in the recording bar, or the second text is displayed at an upper layer of the first text.

According to the foregoing technical solution, when the second text goes beyond the first interface, the second text may be displayed below the recording bar, embedded and displayed in the recording bar, or displayed on the upper layer of the first text. In this way, the user can conveniently view a transcription status in real time by using the second text, and user experience can be improved.

In a possible design, that the electronic device detects that the second text goes beyond the first interface includes: The electronic device detects a second operation, where the second operation is used to enable the second text to go beyond the first interface. Alternatively, the electronic device detects that an editing input focus exists on the first interface and a last line of the second text is not on the first interface.

For example, the second operation may be a slide operation. The user may slide the second text out of the first interface with the slide operation. Alternatively, in a transcription process, the editing input focus exists on the first interface. With input of the voice signals, a quantity of transcribed texts is larger, and the second text gradually goes beyond the first interface. However, due to existence of the editing input focus, the interface does not scroll along with a text for which transcription is being performed.

In a possible design, the method further includes: The electronic device detects a third operation for the first text on the first interface, where the third operation is used to trigger generation of an editing input focus. The electronic device maintains a location of the first interface in response to the third operation, where the first interface includes the editing input focus.

It should be noted that maintaining the location of the first interface may be understood as that a page is not scrolled, but displayed content may be updated. Specifically, the foregoing technical solution may include the following scenarios:

Scenario 2: The second-type text is to go beyond the bottom of a screen, and the user performs an editing operation in an area of the first-type text. In this scenario, the second-type text may go beyond the first interface as a quantity of voice signal inputs increases.

Scenario 4: The second-type text is displayed on a screen, and an input cursor exists in an area of the first-type text.

In other words, when an editing input focus exists in the first text, the location of the first interface may be maintained, in other words, the location of the first interface is not affected when the second text continues to be updated. In this way, a problem that the page jumps back and forth can be avoided, and user experience can be improved.

For example, the third operation may be a tap operation performed by the user by using a left button of a mouse in the scenario 2, and the tap operation may trigger the editing input focus to generate a cursor. Then, as the quantity of transcribed texts increases, a page location remains unchanged, in other words, the page does not scroll, but page content may be updated with the transcribed text.

In a possible design, when the editing input focus is not on the first interface, and the last line of the second text is displayed on the first interface, the method further includes:

The electronic device detects a fourth operation, where the fourth operation is used to edit the first text. The electronic device displays a fourth interface in response to the fourth operation, where the fourth interface includes the editing input focus.

According to the foregoing technical solution, when the last line of the second text is displayed on the first interface, and the editing input focus is not on the first interface, if the user performs an editing operation, the electronic device may jump, in response to the editing operation, to an interface on which the editing input focus is located. In this way, the user can conveniently perform the editing operation and check the editing operation.

For example, the fourth operation may be an editing operation in a scenario 5. For example, the editing operation may be a paste operation. The editing operation may be used to edit the first text, so that content of the first text is updated. In this way, if the editing input focus is not on the first interface, when text editing is performed, a page may jump to the fourth interface on which the editing input focus is located.

In a possible design, when the editing input focus is in the first text, the method further includes:

The electronic device detects that the second text goes beyond the first interface, and detects a fifth operation, where the fifth operation is used to enable the last line of the second text to be displayed on the first interface. The electronic device displays the last line of the second text on the first interface in response to the fifth operation. The electronic device displays a fifth interface, where the fifth interface is an interface that is updated in a scrolling manner with the voice signals after the first interface.

For example, the fifth operation may be a gesture operation performed by the user on the first interface in a scenario 3, for example, a slide operation from bottom to top. The gesture operation may be used to slide a page downwards, so that the last line of the second-type text is completely displayed on the first interface. Then, as the quantity of transcribed texts increases, the page continuously slides along with the second-type text, and displays the fifth interface that is updated in the scrolling manner with the voice signals.

According to the foregoing technical solution, the electronic device may enable, in response to a user operation, for example, the slide operation, the last line of the second text to be displayed on the first interface, and then the page may scroll with input of the voice signals.

In a possible design, that the electronic device determines that an editing input focus exists in the first text or the second text includes:

The electronic device determines that a cursor exists in the first text or the second text. Alternatively, the electronic device detects an operation of selecting the first text or the second text.

According to the foregoing technical solution, the electronic device may determine, by using the cursor or whether a text selection operation is detected, whether the editing input focus exists, to perform text editing in response to the editing operation when determining that the editing input focus exists.

According to a second aspect, this application provides an electronic device. The electronic device includes a display, one or more processors, one or more memories, one or more sensors, a plurality of applications, and one or more computer programs. The one or more computer programs are stored in the one or more memories, and the one or more computer programs include instructions. When the instructions are invoked and executed by the one or more processors, the electronic device is enabled to perform the method according to any one of the first aspect or the possible designs of the first aspect.

According to a third aspect, this application further provides an electronic device. The electronic device includes modules/units for performing the method according to any one of the first aspect or the possible designs of the first aspect. The modules/units may be implemented by hardware, or may be implemented by hardware executing corresponding software.

According to a fourth aspect, this application further provides a computer-readable storage medium. The computer-readable storage medium stores instructions. When the instructions are run on an electronic device, the electronic device is enabled to perform the method according to any one of the first aspect and the possible designs of the first aspect.

According to a fifth aspect, this application further provides a computer program product. When the computer program product runs on an electronic device, the electronic device is enabled to perform the method according to any one of the first aspect and the possible designs of the first aspect in embodiments of this application.

For each of the second aspect to the fifth aspect and technical effect that can be achieved by each aspect, refer to the descriptions of technical effect that can be achieved by the possible solutions in the first aspect. Details are not described herein again.

### BRIEF DESCRIPTION OF DRAWINGS

FIG. 1A and FIG. 1B are a diagram of an application scenario according to an embodiment of this application;
FIG. 2 is a diagram of a structure of an electronic device according to an embodiment of this application;
FIG. 3 is a data flow diagram based on a software structure according to an embodiment of this application;
FIG. 4 is a flowchart of a text editing method according to an embodiment of this application;
FIG. 5 is a diagram of a user interface according to an embodiment of this application;
FIG. 6A is a diagram of a user interface of recording-to-text transcription according to an embodiment of this application;
FIG. 6B is a diagram of another user interface of recording-to-text transcription according to an embodiment of this application;
FIG. 6C is a diagram of still another user interface of recording-to-text transcription according to an embodiment of this application;
FIG. 6D is a diagram of still another user interface of recording-to-text transcription according to an embodiment of this application;
FIG. 6E is a diagram of still another user interface of recording-to-text transcription according to an embodiment of this application;
FIG. 6F is a diagram of still another user interface of recording-to-text transcription according to an embodiment of this application;
FIG. 7A is a diagram of still other user interfaces of recording-to-text transcription according to an embodiment of this application;
FIG. 7B is a diagram of still other user interfaces of recording-to-text transcription according to an embodiment of this application;
FIG. 7C(a) to FIG. 7C(c) are a diagram of still other user interfaces of recording-to-text transcription according to an embodiment of this application; and
FIG. 8 is a diagram of a structure of another electronic device according to an embodiment of this application.

### DESCRIPTION OF EMBODIMENTS

The following describes in detail technical solutions in embodiments of this application with reference to accompanying drawings in the following embodiments of this application.

It should be understood that an application program (an application for short) in embodiments of this application is a software program that can implement one or more specific functions. Usually, a plurality of applications may be installed in an electronic device. For example, the plurality of applications are a camera application, a short messaging service message application, an email application, a video application, a music application, and the like. An application mentioned below may be an application installed before the electronic device is delivered from a factory, or may be an application downloaded from a network or obtained from another electronic device by a user in a process of using the electronic device.

In addition, in the following embodiments, "at least one" means one or more, and "a plurality of' means two or more. In addition, it should be understood that in descriptions of this application, terms such as "first" and "second" are merely used for differentiation in description.

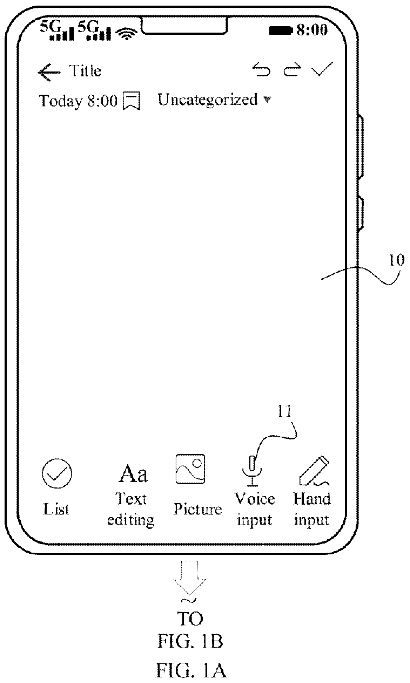

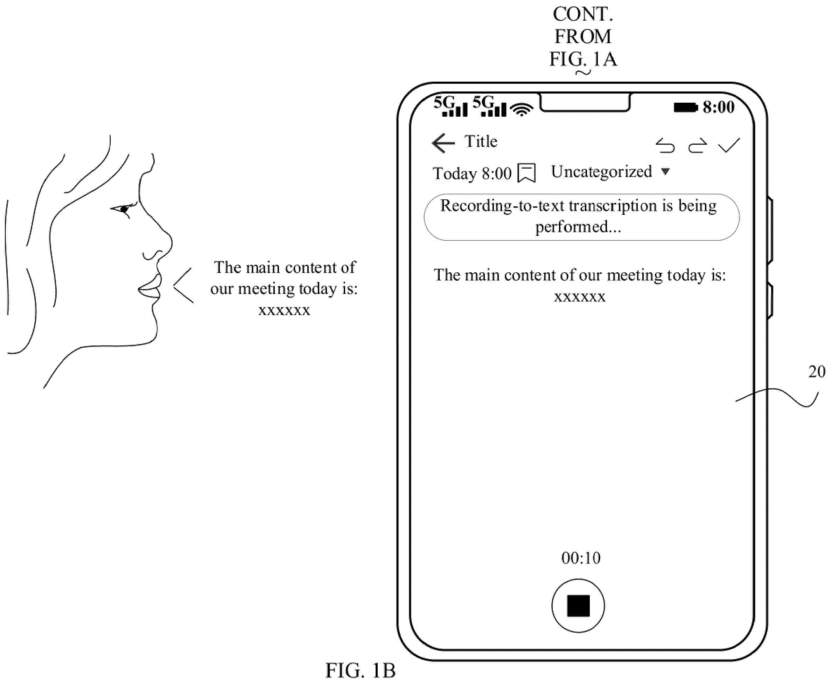

FIG. 1A and FIG. 1B are a diagram of an application scenario according to an embodiment of this application. With reference to FIG. 1A and FIG. 1B, in this scenario, it is assumed that a user opens a notepad application program on a mobile phone, for example, an interface 10 shown in the figure; and then the user may tap a "Voice input" button 11 on the interface 10. In this way, when the user is speaking, a sound of the user may be recorded and a recording may be transcribed into a text, for example, an interface 20 shown in the figure.

Based on the foregoing application scenario, embodiments of this application provide a text editing method. According to the method, a user can simultaneously edit a transcribed text in a recording process, and this improves editing efficiency of recording-to-text transcription and improves user experience.

It should be noted that the text editing method provided in embodiments of this application is applicable to any electronic device that has a display and a recording function and that can transcribe a recording into a text, for example, a mobile phone, a tablet computer, a wearable device (for example, a watch, a band, a smart helmet, or smart glasses), a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA). This is not limited in embodiments of this application. The electronic device in embodiments of this application may be a foldable electronic device, for example, a foldable mobile phone or a foldable tablet computer. This is not limited in this application. In addition, in an example embodiment, the electronic device includes but is not limited to an electronic device with iOS^{®}, Android^{®}, Microsoft^{®}, HarmonyOS^{®}, or another operating system.

The following uses a mobile phone 100 as an example to describe a structure of the electronic device.

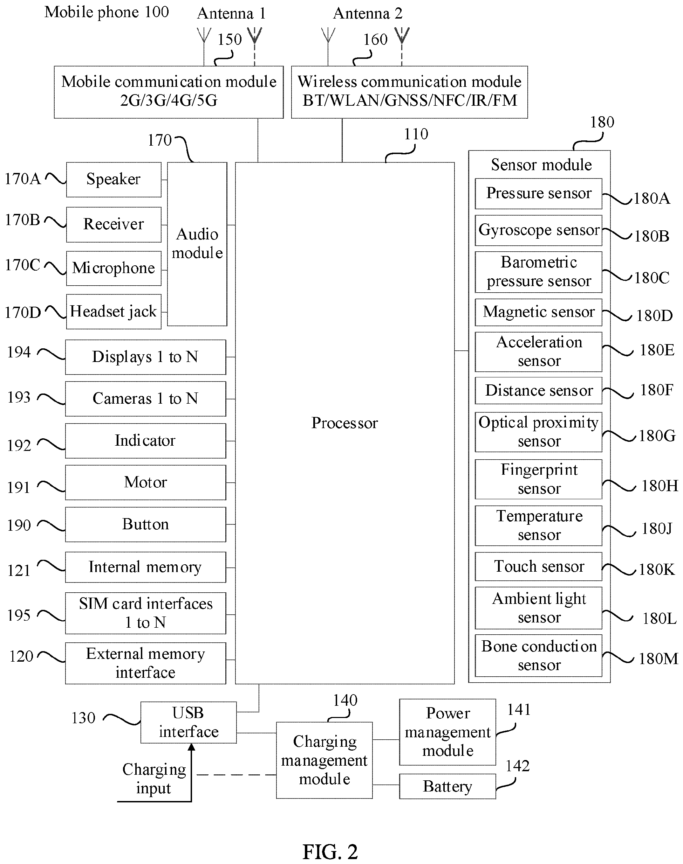

As shown in FIG. 2, the mobile phone 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors. The controller may be a nerve center and a command center of the mobile phone 100. The controller may generate an operation control signal based on an instruction operation code and a time sequence signal, to complete control of instruction fetching and instruction execution. A memory may be further disposed in the processor 110, and is configured to store instructions and data. In some embodiments, the memory in the processor 110 is a cache. The memory may store instructions or data that has just been used or is cyclically used by the processor 110. If the processor 110 needs to use the instructions or the data again, the processor 110 may directly invoke the instructions or the data from the memory. This avoids repeated access, reduces waiting time of the processor 110, and improves system efficiency.

The USB interface 130 is an interface that complies with a USB standard specification, and may be specifically a mini USB interface, a micro USB interface, a USB type C interface, or the like. The USB interface 130 may be configured to connect to a charger to charge the mobile phone 100, and may be configured to transmit data between the mobile phone 100 and a peripheral device. The charging management module 140 is configured to receive a charging input from a charger. The power management module 141 is configured to connect to the battery 142, the charging management module 140, and the processor 110. The power management module 141 receives an input from the battery 142 and/or the charging management module 140, and supplies power to the processor 110, the internal memory 121, an external memory, the display 194, the camera 193, the wireless communication module 160, and the like.

A wireless communication function of the mobile phone 100 may be implemented through the antenna 1, the antenna 2, the mobile communication module 150, the wireless communication module 160, the modem processor, the baseband processor, and the like. The antenna 1 and the antenna 2 are configured to transmit and receive electromagnetic wave signals. Each antenna in the mobile phone 100 may be configured to cover one or more communication frequency bands. Different antennas may be further multiplexed, to improve antenna utilization. For example, the antenna 1 may be multiplexed as a diversity antenna in a wireless local area network. In some other embodiments, the antenna may be used in combination with a tuning switch.

The mobile communication module 150 may provide a solution that is applied to the mobile phone 100 and that is for wireless communication including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit the electromagnetic wave to the modem processor for demodulation. The mobile communication module 150 may further amplify a signal modulated by the modem processor, and the amplified signal is converted into an electromagnetic wave through the antenna 1 for radiation. In some embodiments, at least some functional modules of the mobile communication module 150 may be disposed in the processor 110. In some embodiments, at least some functional modules of the mobile communication module 150 may be disposed in a same component as at least some modules of the processor 110.

The wireless communication module 160 may provide a solution that is applied to the mobile phone 100 and that is for wireless communication including a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, and the like. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave through the antenna 2 for radiation.

In some embodiments, the antenna 1 of the mobile phone 100 is coupled to the mobile communication module 150, and the antenna 2 is coupled to the wireless communication module 160, so that the mobile phone 100 may communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), a 5th generation (5th generation, 5G) mobile communication system, future communication systems such as a 6th generation (6th generation, 6G) system, BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The display 194 is configured to display a display interface of an application, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flex light-emitting diode, FLED), a mini-LED, a micro-LED, a micro-OLED, a quantum dot light-emitting diode (quantum dot light-emitting diode, QLED), or the like. In some embodiments, the mobile phone 100 may include one or N displays 194, where N is a positive integer greater than 1. In embodiments of this application, the display 194 may be configured to display an application interface, for example, may display an interface of recording-to-text transcription. It should be understood that the display 194 may be a touchable display, and a user may directly perform a tap operation, a touch and hold operation, a slide operation, or the like on the display.

The camera 193 is configured to capture a static image or a video. The camera 193 may include a front-facing camera and a rear-view camera.

The internal memory 121 may be configured to store computer-executable program code. The executable program code includes instructions. The processor 110 runs the instructions stored in the internal memory 121, to perform various function applications and data processing of the mobile phone 100. The internal memory 121 may include a program storage area and a data storage area. The program storage area may store an operating system, software code of at least one application program (for example, an iQIYI application or a WeChat application), and the like. The data storage area may store data (for example, an image or a video) and the like generated in a process of using the mobile phone 100. In addition, the internal memory 121 may include a highspeed random access memory, and may further include a non-volatile memory, for example, at least one magnetic disk storage component, a flash memory component, or a universal flash storage (universal flash storage, UFS).

The external memory interface 120 may be configured to connect to an external storage card, for example, a micro SD card, to extend a storage capability of the mobile phone 100. The external storage card communicates with the processor 110 through the external memory interface 120, to implement a data storage function. For example, files such as a picture and a video are stored in the external storage card.

The mobile phone 100 may implement an audio function, for example, music playing and recording, through the audio module 170, the speaker 170A, the receiver 170B, the microphone 170C, the headset jack 170D, the application processor, and the like. In some embodiments of this application, the mobile phone 100 may collect, through the microphone 170C, a sound made by the user, and record the collected sound.

The pressure sensor 180A is configured to sense a pressure signal, and can convert the pressure signal into an electrical signal. In some embodiments, the pressure sensor 180A may be disposed on the display 194.

The gyroscope sensor 180B may be configured to determine a motion posture of the mobile phone 100. In some embodiments, angular velocities of the mobile phone 100 around three axes (that is, an x-axis, a y-axis, and a z-axis) may be determined through the gyroscope sensor 180B. The gyroscope sensor 180B may be configured to determine a motion posture of the mobile phone 100. In some embodiments, angular velocities of the mobile phone 100 around three axes (that is, an x-axis, a y-axis, and a z-axis) may be determined through the gyroscope sensor 180B. The gyroscope sensor 180B may be configured to implement image stabilization during photographing. For example, when a shutter is pressed, the gyroscope sensor 180B detects an angle at which the mobile phone 100 shakes, and calculates, based on the angle, a distance that needs to be compensated by a lens module, so that a lens cancels shaking of the mobile phone 100 through reverse motion, to implement image stabilization. The gyroscope sensor 180B may be further used in scenarios of navigation and motion sensing gaming.

The barometric pressure sensor 180C is configured to measure barometric pressure. In some embodiments, the mobile phone 100 calculates an altitude based on a value of the barometric pressure measured by the barometric pressure sensor 180C, to assist in positioning and navigation. The magnetic sensor 180D includes a Hall sensor. The mobile phone 100 may detect opening and closing of a flip leather case through the magnetic sensor 180D. In some embodiments, when the mobile phone 100 is a flip phone, the mobile phone 100 may detect opening and closing of a flip cover through the magnetic sensor 180D. Further, features such as automatic unlocking through flipping are set based on a detected opening/closing state of the leather case or the flip cover. The acceleration sensor 180E may detect magnitudes of accelerations of the mobile phone 100 in various directions (usually along the three axes). When the mobile phone 100 is stationary, a magnitude and a direction of gravity may be detected. The acceleration sensor 180E may be further configured to identify a posture of the electronic device, and is used in applications such as landscape/portrait orientation switching and a pedometer.

The distance sensor 180F is configured to measure a distance. The mobile phone 100 may measure the distance by using infrared or lasers. In some embodiments, in a photographing scenario, the mobile phone 100 may use the distance sensor 180F to measure a distance to implement fast focusing. The optical proximity sensor 180G may include, for example, a light-emitting diode (LED) and an optical detector, for example, a photodiode. The light-emitting diode may be an infrared light-emitting diode. The mobile phone 100 emits infrared light to the outside through the light-emitting diode. The mobile phone 100 uses the photodiode to detect infrared reflected light from a nearby object. When sufficient reflected light is detected, it may be determined that there is an object near the mobile phone 100. When insufficient reflected light is detected, the mobile phone 100 may determine that there is no object near the mobile phone 100. The mobile phone 100 may detect, through the optical proximity sensor 180G, whether the user holds the mobile phone 100 close to an ear to make a call, to automatically turn off the screen to save power. The optical proximity sensor 180G may be further used in a leather case mode or a pocket mode to automatically unlock or lock the screen.

The ambient light sensor 180L is configured to sense ambient light brightness. The mobile phone 100 may adaptively adjust brightness of the display 194 based on the sensed ambient light brightness. The ambient light sensor 180L may be further configured to automatically adjust a white balance during photographing. The ambient light sensor 180L may further cooperate with the optical proximity sensor 180G to detect whether the mobile phone 100 is in a pocket, to implement mistouch prevention. The fingerprint sensor 180H is configured to collect a fingerprint. The mobile phone 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the mobile phone 100 executes a temperature processing policy based on the temperature detected by the temperature sensor 180J. For example, when the temperature reported by the temperature sensor 180J exceeds a threshold, the mobile phone 100 lowers performance of a processor near the temperature sensor 180J, to reduce power consumption and implement thermal protection. In some other embodiments, when the temperature is less than another threshold, the mobile phone 100 heats the battery 142, to avoid abnormal shutdown of the mobile phone 100 caused by a low temperature. In some other embodiments, when the temperature is less than still another threshold, the mobile phone 100 boosts an output voltage of the battery 142, to avoid abnormal shutdown caused by a low temperature.

The touch sensor 180K is also referred to as a "touch panel". The touch sensor 180K may be disposed on the display 194, and the touch sensor 180K and the display 194 form a touchscreen. The touchscreen is also referred to as a "touch screen". The touch sensor 180K is configured to detect a touch operation performed on or near the touch sensor. The touch sensor may transfer the detected touch operation to the application processor to determine a touch event type. A visual output related to the touch operation may be provided through the display 194. In some other embodiments, the touch sensor 180K may alternatively be disposed on a surface of the mobile phone 100 at a location different from that of the display 194. In some embodiments of this application, the mobile phone 100 may first determine whether a current scenario is a dual-focus input scenario. If the current scenario is the dual-focus input scenario (in other words, there is a voice input focus and a user operation input focus), the touch sensor 180K may detect an editing operation of the user on the display, for example, an operation of deleting a text. The mobile phone 100 edits, in response to the editing operation, a text for which transcription is completed, to perform, while performing voice-to-text transcription, an editing operation on the text for which transcription is completed. Generation of the user operation input focus may be triggered by a tap operation of the user on the display, for example, triggered when detecting a tap operation or a touch and hold operation of the user at a specific location in the text for which transcription is completed.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse, and receive a blood pressure beating signal.

The button 190 includes a power button, a volume button, and the like. The button 190 may be a mechanical button, or may be a touch button. The mobile phone 100 may receive a button input, and generate a button signal input related to a user setting and function control of the mobile phone 100. The motor 191 may generate a vibration prompt. The motor 191 may be configured to provide an incoming call vibration prompt or a touch vibration feedback. For example, touch operations performed on different applications (for example, photographing and audio playing) may correspond to different vibration feedback effect. The indicator 192 may be an indicator light, and may be configured to indicate a charging status and a power change, or may be configured to indicate a message, a missed call, a notification, and the like. The SIM card interface 195 is configured to connect to a SIM card. The SIM card may be inserted into the SIM card interface 195 or removed from the SIM card interface 195, to implement contact with or separation from the mobile phone 100.

It may be understood that the components shown in FIG. 2 do not constitute a specific limitation on the mobile phone. The mobile phone may further include more or fewer components than those shown in the figure, some components may be combined, some components may be split, or different component arrangements may be used.

A software system of the mobile phone 100 may use a layered architecture, including an event-driven architecture, a micro kernel architecture, a micro service architecture, or a cloud architecture. In embodiments of this application, an Android system with a layered architecture is used as an example to describe the software structure of the mobile phone 100. It should be understood that the system in embodiments of this application may alternatively be a HarmonyOS system. This is not limited in this application.

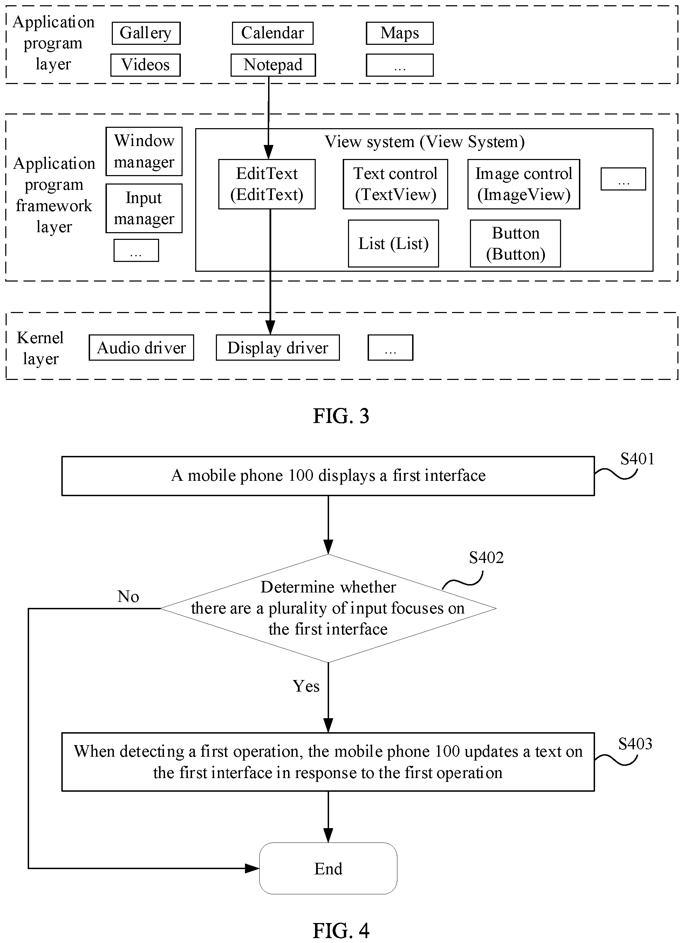

FIG. 3 is a data flow diagram based on a software structure according to an embodiment of this application. In a layered architecture, software is divided into several layers, and each layer has a clear role and task. The layers communicate with each other through a software interface. In some embodiments, an Android system is divided into five layers: an application program layer, an application program framework layer, Android runtime (Android runtime, ART) and native C/C++ libraries, a hardware abstraction layer (hardware abstract layer, HAL), and a kernel layer from top to bottom. The following uses the application program layer, the application program framework layer, and the kernel layer as an example to describe a data flow process in this embodiment of this application.

The application program layer may include a series of application program packages. As shown in FIG. 3, the application program packages may include application programs such as Gallery, Calendar, Maps, Videos, and Notepad.

The application program framework layer provides an application programming interface (application programming interface, API) and a programming framework for the application programs at the application program layer. The application program framework layer includes some predefined functions.

As shown in FIG. 3, the application program framework layer may include a window manager, an input manager, and a view system. Certainly, the application program framework layer may further include a content provider, a resource manager, a notification manager, an activity manager, and the like.

The window manager provides a window manager service (window manager service, WMS). The WMS may be used for window management, window animation management, surface management, and is used as a transit station of an input system.

The view system (View System) includes visible controls, such as a text control (TextView), an edit text control (EditText), an image control (ImageView), a button (Button), and a list (List). The view system may be configured to construct an application program. A display interface may include one or more views. For example, a display interface including a short messaging service message notification icon may include a text display view and a picture display view. Text View is used to display text content to a user, and is not editable. The EditText control is used to allow the user to enter text content, that is, EditText is editable.

The input manager may provide an input manager service (Input Manager Service, IMS). The IMS may be used for management of a system input, for example, a touchscreen input, a key input, or a sensor input. The IMS obtains an event from an input device node and allocates the event to an appropriate window through interaction with the WMS.

The resource manager provides various resources such as a localized character string, an icon, a picture, a layout file, and a video file for an application program.

The content provider is configured to store and obtain data, and enable the data to be accessed by an application program. The data may include a video, an image, audio, calls that are made and received, a browsing history and a browsing bookmark, an address book, and the like.

The notification manager enables an application program to display notification information in a status bar, and may be configured to convey a notification message. The notification information may automatically disappear after a short pause without requiring a user interaction. For example, the notification manager is configured to notify download completion and provide a message prompt. The notification manager may alternatively provide a notification that appears in a top status bar of the system in a form of a graph or a scroll bar text, for example, a notification of an application program running in a background, or may provide a notification that appears on a screen in a form of a dialog window. For example, text information is prompted in the status bar, a prompt tone is made, an electronic device vibrates, or an indicator light blinks.

The activity manager may provide an activity manager service (Activity Manager Service, AMS). The AMS may be used to start, switch, and schedule system components (for example, an activity, a service, a content provider, and a broadcast receiver), and manage and schedule application processes.

The kernel layer is a layer between hardware and software. The kernel layer includes at least a display driver, a camera driver, an audio driver, and a sensor driver.

In the following embodiments, the mobile phone 100 shown in FIG. 2 is used as an example for description.

In embodiments of this application, if text editing needs to be performed while recording-to-text transcription is performed, an editing input focus needs to be newly added on an interface in addition to a voice input focus. Usually, only one focus can exist on the interface. Therefore, the newly added editing input focus may cause the following several technical problems:

Problem 1: When an EditText control responds to a tap operation of a user, a cursor is displayed at a tap location. When the EditText control responds to a touch and hold operation of the user, a text is selected and a menu (for example, cut or copy) is popped up. In this case, if voice inputs continuously exist, that is, when a new focus appears, the cursor or the pop-up menu may disappear.

Problem 2: In a recording-to-text transcription process, if voices are continuously added, a scroll (scroll) function is invoked by default to scroll a current page to a latest added text. In addition, each time text content is changed, view redrawing is triggered. Each time the EditText control performs redrawing, a cursor at an editing location (selection) of the user is recorded and scrolling is started. Therefore, a system performs scrolling to the editing cursor by default. However, when voices are continuously added, the system automatically performs scrolling to a latest input text. In this case, if a difference between a location of the editing cursor and a location of the latest input text is approximately a screen, a page may jump back and forth.

Problem 3: If an editing focus is newly added, a text for which transcription is being performed is editable.

For the foregoing technical problems, the following embodiment is provided in this application to resolve the existing problems one by one, so that two input focuses can exist simultaneously on an interface of recording-to-text transcription, and text editing can be performed while recording-to-text transcription is performed.

FIG. 4 is a flowchart of a text editing method according to an embodiment of this application. As shown in FIG. 4, the method may include the following steps:
S401: A mobile phone 100 displays a first interface.

The first interface is an interface of real-time recording-to-text transcription. The first interface may include a first-type text and a second-type text. The first-type text is a text for which transcription is completed by artificial intelligence (artificial intelligence, AI) and on which correction is not subsequently performed by the AI. The second-type text is a text for which transcription is being performed by the AI, or a text for which transcription is completed and on which semantic correction may be subsequently performed by the AI. It should be understood that the two types of texts may be distinguished by using different colors on the interface. For example, a color of a text for which transcription is completed is black, and a color of a text for which transcription is being performed is gray. For another example, a text for which transcription is completed is a text in a bold font, and a text for which transcription is being performed is a text in a non-bold font. In addition, the text for which transcription is completed is a complete sentence, and the text for which transcription is being performed may be an incomplete sentence. For example, there is an ellipsis at the end of the text for which transcription is being performed.

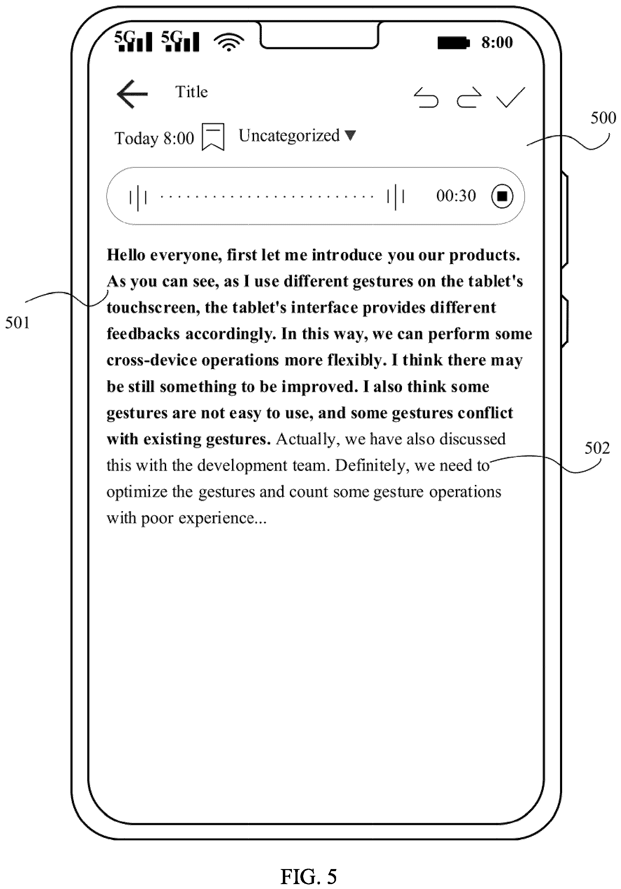

For example, as shown in FIG. 5, it is assumed that the mobile phone 100 displays an interface 500 shown in FIG. 5, and the interface 500 may include a first-type text 501 and a second-type text 502. It should be understood that, in the diagram shown in FIG. 5, the first-type text is a text in the bold font, and the second-type text is a text in the non-bold font.

S402: The mobile phone 100 determines whether there are a plurality of input focuses on the first interface. If there are a plurality of input focuses on the first interface, S403 continues to be performed. If there are not a plurality of input focuses, the procedure ends.

In some embodiments, the mobile phone 100 may determine, based on a quantity of cursors existing on the first interface, whether there are a plurality of input focuses. If the quantity of cursors is 1, it indicates that there is one input focus on the first interface. If the quantity of cursors is 2, it indicates that there are two input focuses on the first interface.

In some other embodiments, when the mobile phone 100 detects, on the first interface, an operation of selecting a text, for example, a touch and hold operation or a double-click operation performed at a specific location on the first interface by using a left button of a mouse, the mobile phone 100 may also determine that there is an input focus on the first interface. In other words, even if the touch and hold operation or the double-click operation does not trigger a continuously blinking cursor, because a text is selected with the touch and hold operation or the double-click operation, a user may perform operations such as deletion based on the selected text. Therefore, the touch and hold operation or the double-click operation may also trigger the input focus.

Because the first interface includes the second-type text, in other words, the mobile phone 100 is collecting a sound signal of the user, and is transcribing the collected sound signal into a text, it may be considered that there is a voice input focus. Therefore, it is only necessary to determine whether there is another input focus.

In this embodiment of this application, the following several manners may be used to enable another input focus to exist on the interface:
Manner 1: The user performs a tap operation or a touch and hold operation at a specific location on the first interface by using a finger. After the user taps the first-type text or the second-type text on the first interface, a blinking cursor (for example, a black continuously blinking vertical line) appears. When the user touches and holds a segment of text on the first interface, the text is selected and a menu (for example, cut, copy, or select all) is popped up.
Manner 2: The user may tap a specific location on the first interface by using a stylus.
Manner 3: The user may perform a click/double-click operation at a specific location on the first interface by using the left button of the mouse, or perform an editing operation at the location by using a keyboard after the click/double-click operation. It should be understood that, after the user performs the double-click operation at the specific location on the first interface by using the left button of the mouse, a segment of text may be selected. That is, this manner generates same effect as the touch and hold operation.
Manner 4: The user may perform an operation by using a keyboard with a touchpad. For example, a specific location on the first interface may be tapped by using the touchpad, so that a blinking cursor appears.

In other words, if the mobile phone 100 detects that the user enables, in at least one of the foregoing manners, a focus other than the voice input focus to exist on the interface, the mobile phone 100 may determine that a current input scenario is a dual-focus input scenario. Then, when a quantity of input focuses is 2, a cursor or a pop-up menu may not be cleared, in other words, two input focuses are allowed to exist simultaneously. This resolves the problem 1 in the foregoing technical problems.

S403: When detecting a first operation, the mobile phone 100 updates a text on the first interface in response to the first operation.

The first operation may be an editing operation of the user on the text on the first interface, for example, an addition, deletion, or modification operation. It should be noted that operations performed by using shortcut keys such as ctrl+v (paste) and ctrl+x (cut) may also be considered as editing operations.

In some embodiments, the second-type text is a text for which transcription is being performed by the AI, or a text for which transcription is completed and on which semantic correction may be subsequently performed by the AI. In this case, if the user edits the second-type text, there is a possibility that the second-type text is modified by the AI. Therefore, the first operation may be an editing operation for the first-type text. In some other embodiments, the first operation may alternatively be an editing operation for the second-type text.

According to the foregoing embodiment, text editing can be performed while real-time recording-to-text transcription is performed, so that text editing efficiency can be improved, and user experience can be improved.

The following describes several possible user interfaces of real-time recording-to-text transcription during actual application of S403.

Type 1: A recording bar and the second-type text are both displayed on the top of a page.

For example, as shown in FIG. 6A, it is assumed that the mobile phone displays an interface 600, and the interface 600 may include a recording bar 601, a second-type text 602, a first-type text 603, a cursor 604, and a virtual keyboard 605. The cursor 604 appears after the user taps a location shown in the figure in the first-type text 603 (a text for which transcription is completed). The second-type text 602 and the recording bar 601 may be displayed above the first-type text 603. The recording bar 601 may include voice signal collection duration 6011, an audio status bar 6012, and a recording stop button 6013. It should be understood that a dashed-line box in which the audio status bar 6012 is located is merely for illustration. During actual product implementation, the dashed-line box is not displayed.

Type 2: The second-type text is displayed above a virtual keyboard.

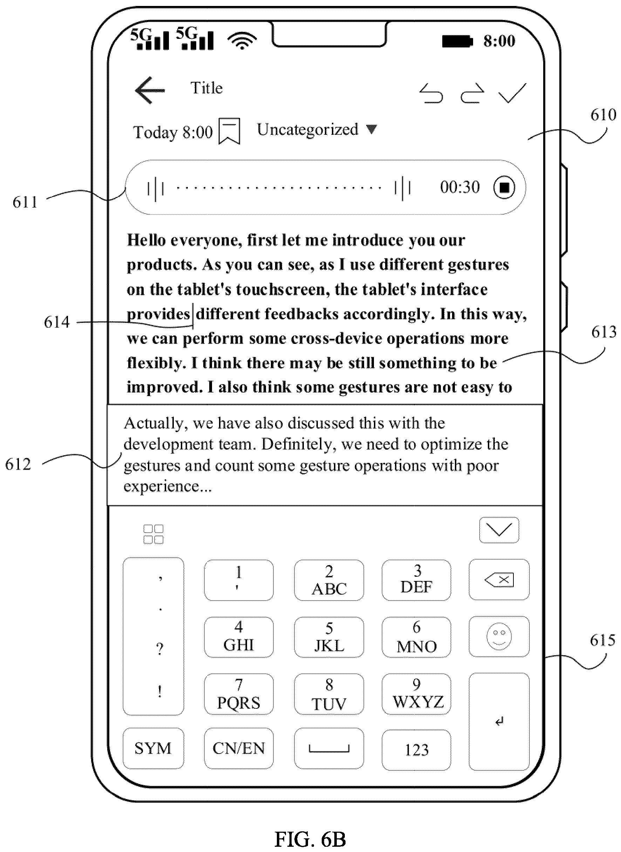

For example, as shown in FIG. 6B, it is assumed that the mobile phone displays an interface 610, and the interface 610 may include a recording bar 611, a second-type text 612, a first-type text 613, a cursor 614, and a virtual keyboard 615. The second-type text 612 may be displayed above the virtual keyboard 615. The cursor 614 appears after the user taps a location shown in the figure in the first-type text 613. It should be noted that a part of the first-type text that is not completely displayed may be folded, and the first-type text may be continuously updated with recognition of the second-type text.

Type 3: The second-type text is embedded and displayed in a recording bar.

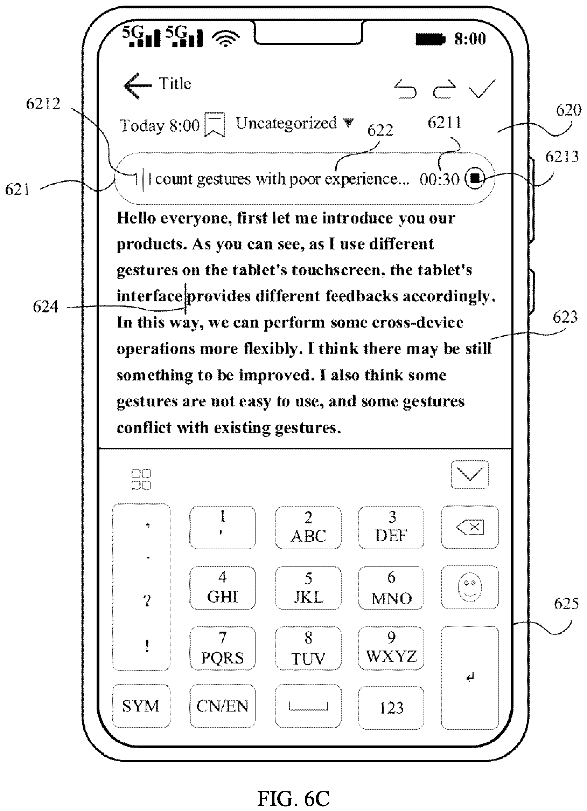

For example, as shown in FIG. 6C, it is assumed that the mobile phone displays an interface 620, and the interface 620 may include a recording bar 621, a second-type text 622, a first-type text 623, a cursor 624, and a virtual keyboard 625. The second-type text 622 may be embedded and displayed in the recording bar 621. The recording bar 621 may include voice signal collection duration 6211, an audio status bar 6212, and a recording stop button 6213. It should be understood that, through comparison of the audio status bar 6012 shown in FIG. 6A and the audio status bar 6212 shown in FIG. 6C, the audio status bar 6012 may be understood as an original audio status bar, and the audio status bar 6212 may be understood as a remaining status bar after a part of locations are occupied by a text for which transcription is being performed.

In this embodiment of this application, when the second-type text is embedded and displayed in the recording bar, the second-type text may occupy a part of locations of an original audio status bar. For example, as shown in FIG. 6C, the second-type text 622 may be displayed between the audio status bar 6212 and the voice signal collection duration 6211. Certainly, the figure is merely an example, and the second-type text may alternatively be displayed at another location. All solutions may fall within the protection scope of this application provided that the second-type text is embedded and displayed in the recording bar (for example, occupies a part of locations of the original audio status bar).

Further, the second-type text embedded and displayed in the recording bar may be a part of the second-type text. For example, the second-type text has 30 words, and 10 words may be embedded and displayed. Certainly, eight words or the like may alternatively be embedded and displayed. This is not limited in this application.

In the foregoing embodiment, the user may trigger displaying of the virtual keyboard on a transcription interface with a tap operation or the like. In other words, when the virtual keyboard is displayed on the interface, a display location of the second-type text on the transcription interface changes.

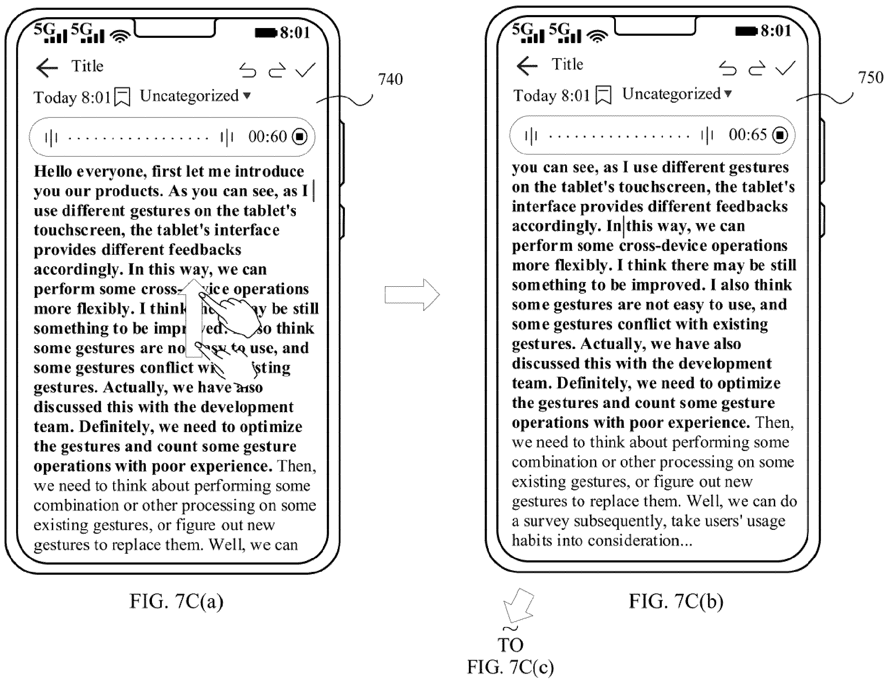

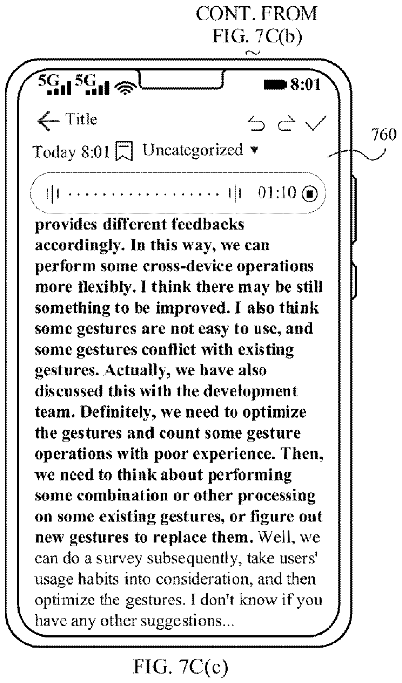

In some other embodiments, when the second-type text goes beyond the bottom of a screen, the display location of the second-type text on the transcription interface may also change. Specifically, that the second-type text goes beyond the bottom of the screen may include the following two cases:
Case 1: An editing input focus exists on a current display interface, and voice input is continuously performed, so that the second-type text goes beyond the bottom of the screen. For details, refer to the following detailed descriptions of FIG. 7C(a) to FIG. 7C(c). Details are not described herein.
Case 2: The user actively slides the interface, for example, performs a slide operation from top to bottom, so that the second-type text goes beyond the bottom of the screen.

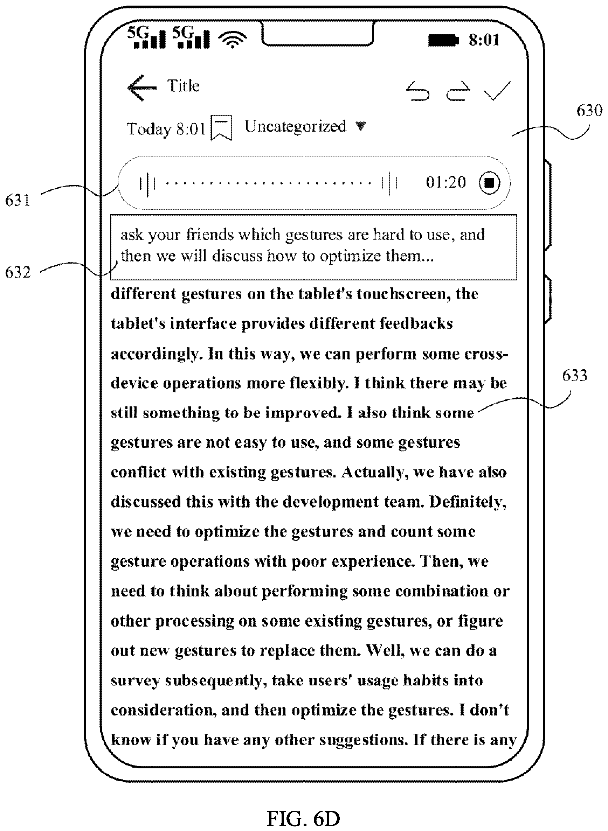

For example, as shown in FIG. 6D, it is assumed that the mobile phone displays an interface 630, and the interface 630 may include a recording bar 631, a second-type text 632, and a first-type text 633. The second-type text 632 has gone beyond the current screen, and the second-type text 632 may be displayed below the recording bar. In the diagram shown in FIG. 6D, the second-type text 632 may be displayed at an upper layer of the first-type text 633, in other words, cover the first-type text 633. It should be understood that, during actual product implementation, the second-type text 632 may alternatively not cover the first-type text 633, for example, may be displayed in a display manner of the second-type text 602 and the first-type text 603 shown in FIG. 6A.

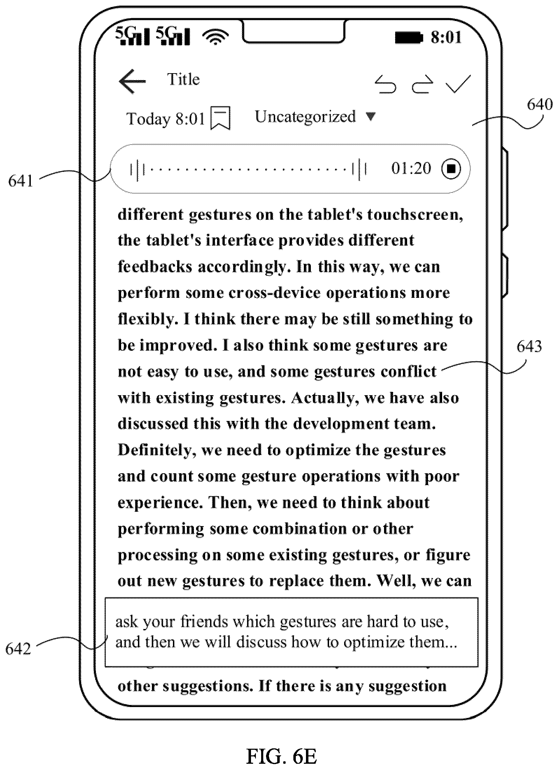

As shown in FIG. 6E, it is assumed that the mobile phone displays an interface 640, and the interface 640 may include a recording bar 641, a second-type text 642, and a first-type text 643. The second-type text 642 has gone through the current screen, and the second-type text 642 may be displayed at the bottom of the screen. In the diagram shown in FIG. 6E, the second-type text 642 may be displayed at an upper layer of the first-type text 643, in other words, cover the first-type text 643.

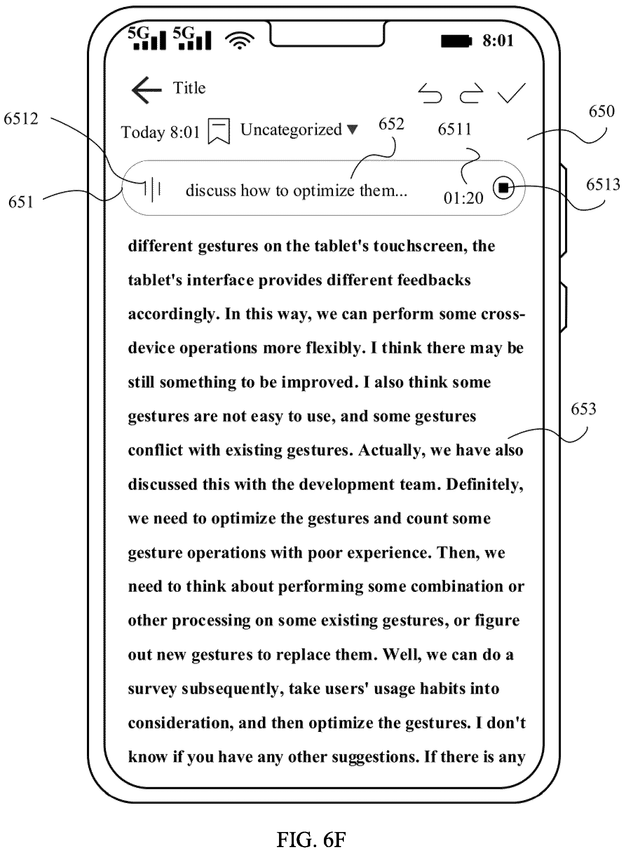

As shown in FIG. 6F, it is assumed that the mobile phone displays an interface 650, and the interface 650 may include a recording bar 651, a second-type text 652, and a first-type text 653. The recording bar 651 may include voice signal collection duration 6511, an audio status bar 6512, and a recording stop button 6513. The second-type text 652 has gone through the current screen. The second-type text 652 may be displayed between the audio status bar 6512 and the voice signal collection duration 6511. Certainly, the figure is merely an example. All solutions may fall within the protection scope of this application provided that the second-type text 652 is embedded and displayed in the recording bar 651.

In the foregoing display manners, the user may intuitively view a transcription status. For example, when the second-type text is displayed, the user may determine that a voice signal is being transcribed into a text.

For the problem 2 in the foregoing technical problems, in this embodiment of this application, if the current scenario is the dual-focus input scenario, a cursor location is not refreshed. In this way, a distance difference is not generated during subsequent scrolling. In addition, the transcription continues. If scrolling has been performed to the bottom of the screen, scrolling can be continued with addition of a text, to resolve a problem that a page jumps back and forth. Based on this, the following may describe in detail, with reference to user interfaces in different scenarios in a recording-to-text transcription process, a solution to a page jump problem that may occur in some scenarios.

Scenario 1: The second-type text is to go beyond the bottom of the screen.

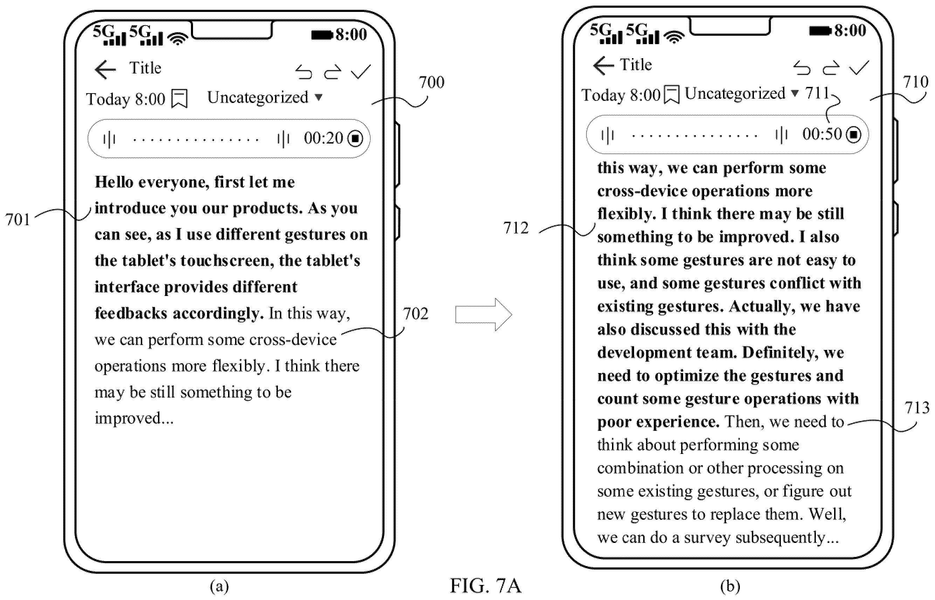

For example, as shown in FIG. 7A, after the user performs recording-to-text transcription by using a notepad application for a period of time, for example, 20 seconds, the mobile phone may display an interface 700 shown in (a) in FIG. 7A. The interface 700 may include a first-type text 701 and a second-type text 702. The second-type text 702 temporarily does not go beyond the screen of the mobile phone. For this scenario, when voice inputs always exist, a page may scroll along with a text for which transcription is being performed. For example, with reference to an interface 710 shown in (b) in FIG. 7A, the interface 710 may include transcription time prompt information 711 (for example, recording-to-text transcription is performed for 50 seconds), a first-type text 712, and a second-type text 713. With passage of time of the recording-to-text transcription, the second-type text 701 in the interface 700 is updated to the first-type text in the interface 710, and a last line of the second-type text is on the screen, in other words, the last line of the second-type text does not go beyond a screen area.

It should be understood that only one input focus exists in the scenario 1. In this scenario, as long as the user does not trigger a new input focus, the page may scroll with the voice inputs, in other words, the last line of the second-type text is always kept in the current screen area.

Scenario 2: The second-type text is to go beyond the bottom of the screen, and the user performs an editing operation in an area of the first-type text.

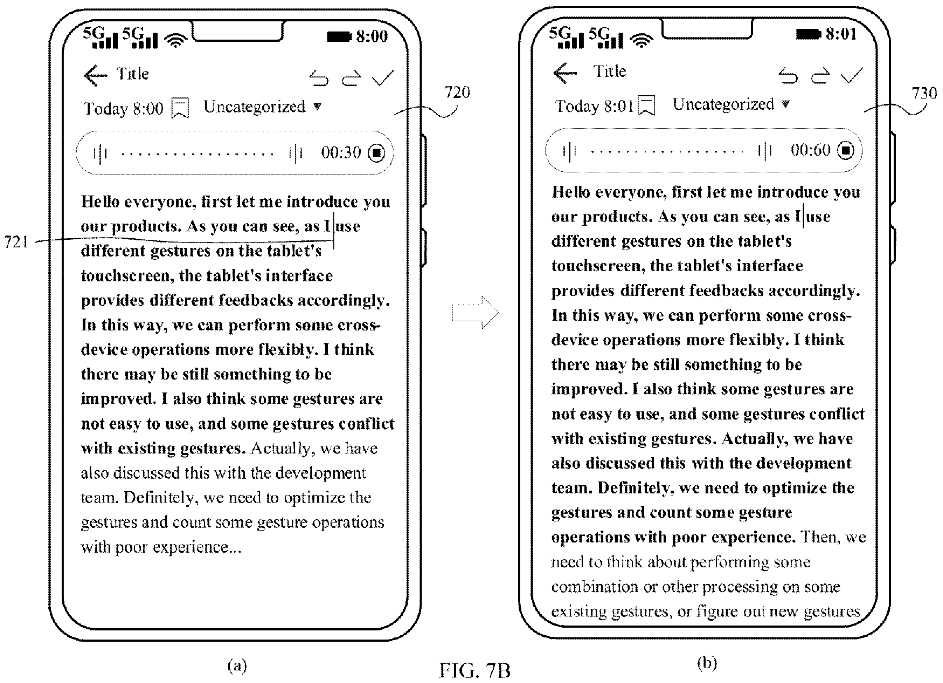

For example, the user may tap in the area of the first-type text or enter content in the area of the first-type text by using the keyboard. As shown in FIG. 7B, it is assumed that the user performs, by using the left button of the mouse, a click operation at a location shown in an interface 720 shown in (a) in FIG. 7B, and then a cursor 721 may appear at the location shown in the figure. In this case, if voices are continuously input, the problem 2 described above may occur. Therefore, in this embodiment of this application, a location of a current page may be maintained, and is not adjusted even if the second-type text is continuously refreshed. For example, when voices are continuously input and transcription time reaches 60 seconds, an interface of the mobile phone 100 may be updated to an interface 730 shown in (b) in FIG. 7B. A first-type text in the interface 730 is more than a first-type text in the interface 720.

It should be understood that, if an electronic device is connected to a keyboard (for example, a Bluetooth keyboard), a virtual keyboard does not appear if a tap operation is performed by using a finger or a click operation is performed by using a mouse. Certainly, if the electronic device is connected to only the mouse but not the keyboard, the virtual keyboard still appears if a click operation is performed by using the mouse.

Scenario 3: The second-type text has gone beyond the bottom of the screen, and an input cursor exists in an area of the first-type text.

Based on the scenario shown in FIG. 7B, after the second-type text goes beyond the bottom of the screen, it is assumed that the user slides the page to a location of the second-type text, so that the second-type text is completely displayed. When voices are continuously input, the page moves with the second-type text, to ensure that a last line of the second-type text does not go beyond the bottom of the screen.

For example, as shown in FIG. 7C(a) to FIG. 7C(c), it is assumed that the mobile phone 100 displays an interface 740 shown in FIG. 7C(a), and a second-type text in the interface 740 has gone beyond the bottom of the screen. It is assumed that the mobile phone 100 detects a gesture operation of the user on the interface 740, for example, a slide operation from bottom to top shown in the figure. In this case, the mobile phone 100 may slide a page downwards in response to the slide operation until the second-type text is completely displayed on the page. For example, the mobile phone 100 displays an interface 750 shown in FIG. 7C(b). Then, as a quantity of transcribed texts increases, the page continuously slides along with the second-type text. For example, after a period of time of transcription, the mobile phone 100 displays an interface 760 shown in FIG. 7C(c).

It should be noted that, in the scenario 3, although the input cursor exists in the area of the first-type text, because the user actively slides the page subsequently to enable the second-type text to be completely displayed on the interface, in this scenario, after the user slides the page, the page may scroll with voice inputs.

Scenario 4: The second-type text is displayed on the screen, and an input cursor exists in an area of the first-type text.

In this scenario, if the user performs an editing operation in the area of the first-type text by using the keyboard, and the input cursor is on the current page, a location of the current page is maintained and is not adjusted even if the second-type text is continuously refreshed. In other words, page representation in this scenario is the same as that in the scenario 2. As long as the input cursor operated by the user is on the current page, the page does not slide with voice inputs. It should be understood that, this scenario is similar to the scenario 2. If voices are continuously input, the problem 2 described above may occur. Therefore, in this embodiment of this application, the location of the page on which the input cursor is located may remain unchanged, to avoid the problem that a page jumps back and forth.

Scenario 5: The second-type text is displayed on the screen, and an input cursor exists in an area of the first-type text that goes beyond the screen.

In this scenario, if the input cursor is in the area of the first-type text, the input cursor is not on the current page, and the user performs an editing operation at a location of the input cursor by using the keyboard, the current page may slide back to a page on which the location of the cursor is located, and a location of the page on which the location of the cursor is located is maintained and is not affected by update of content of the second-type text. In this way, the user can conveniently perform an editing operation and check the editing operation.

Scenario 6: The second-type text is displayed on the screen, and the first-type text goes beyond the top of the screen.

In this scenario, the first-type text goes beyond the current page, and the page slides downwards with voice inputs. In this case, if the user slides the page, for example, slides the page from top to bottom, and therefore a last line of the second-type text goes beyond the bottom of the screen, a page location after sliding remains unchanged and is not adjusted even if the second-type text is continuously refreshed. It should be understood that page representation in this scenario is the same as page representation in the scenario 2 and the scenario 4.

It should be noted that in the foregoing scenario 1 to scenario 6, the scenario 1 and the scenario 6 may be understood as single-focus input scenarios, and other scenarios are dual-focus input scenarios.

Further, for the problem 3 described above, in this embodiment of this application, a color of the second-type text may be set to light gray, and a tapped text location (index) may be calculated based on a tap location in an editing trigger (onTouch) event. If the index belongs to the light gray text area, the touch event is canceled. For example, after the user taps a text, the mobile phone 100 may determine, based on a tap location, whether tapping is performed in an area of the second-type text. If the tapping is performed in the area of the second-type text, the mobile phone 100 does not respond to a tap event, in other words, the user is not allowed to perform an editing operation in the area of the second-type text.

Certainly, in this embodiment of this application, if the tapped text location is in the area of the second-type text, the tap event may alternatively be responded to, in other words, the user is allowed to perform an editing operation in the area of the second-type text. This is not limited in this application.

According to the foregoing descriptions, in this embodiment of this application, technical problems that may exist when an input focus is newly added can be resolved. In this way, two input focuses can exist simultaneously on an interface of recording-to-text transcription, and text editing can be performed while recording-to-text transcription is performed. This improves text editing efficiency and improves user experience.

It should be noted that all or some of the foregoing embodiments provided in this application may be freely and randomly combined with each other. Combined technical solutions also fall within the protection scope of this application.

In the foregoing embodiments provided in this application, the method provided in embodiments of this application is described from a perspective of an electronic device serving as an execution body. To implement functions in the foregoing method provided in embodiments of this application, the electronic device may include a hardware structure and/or a software module, and the foregoing functions are implemented in a form of the hardware structure, the software module, or a combination of the hardware structure and the software module. Whether a specific function in the foregoing functions is performed by using the hardware structure, the software module, or the combination of the hardware structure and the software module depends on particular applications and design constraints of the technical solutions.

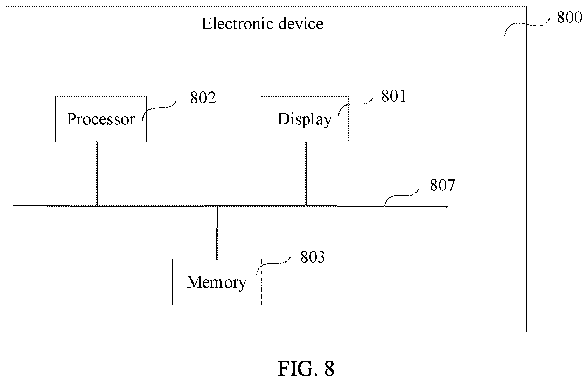

As shown in FIG. 8, some other embodiments of this application disclose an electronic device. The electronic device may be an electronic device with a display. As shown in FIG. 8, the electronic device 800 includes the display 801, one or more processors 802, one or more memories 803, one or more sensors 804 (not shown in the figure), a plurality of applications 805 (not shown in the figure), and one or more computer programs 806 (not shown in the figure). The foregoing components may be connected through one or more communication buses 807.

The display 801 is configured to display an interface of recording-to-text transcription. The memory 803 stores one or more computer programs, and the one or more computer programs include instructions. The processor 802 invokes the instructions stored in the memory 803, to enable the electronic device 800 to perform the method in the foregoing embodiment.

For example, when the instructions are invoked and executed by the one or more processors 802, the electronic device 800 is enabled to perform the following steps: collecting voice signals in real time; displaying a first interface, where the first interface includes a first text and a second text, the first text is a text that is transcribed from a voice signal by artificial intelligence AI and on which semantic correction is completed by the AI, the second text is a text on which semantic correction is not completed by the AI, and collection time of a voice signal corresponding to the second text is later than collection time of the voice signal corresponding to the first text; determining that an editing input focus exists in the first text or the second text; and detecting an editing operation for the first text or the second text, and editing the first text or the second text in response to the editing operation.

In this embodiment of this application, the processor 802 may be a general-purpose processor, a digital signal processor, an application-specific integrated circuit, a field programmable gate array or another programmable logic device, a discrete gate or transistor logic device, or a discrete hardware component, and may implement or perform the method, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module. The software module may be located in the memory 803. The processor 802 reads program instructions from the memory 803, and completes the steps of the foregoing method in combination with the hardware of the processor.

In this embodiment of this application, the memory 803 may be a non-volatile memory, for example, a hard disk drive (hard disk drive, HDD) or a solid-state drive (solid-state drive, SSD), or may be a volatile memory (volatile memory), for example, a RAM. The memory may alternatively be any other medium that can be used to carry or store expected program code in an instruction form or a data structure form and that can be accessed by a computer. However, the memory is not limited thereto. The memory in this embodiment of this application may alternatively be a circuit or any other apparatus that can implement a storage function, and is configured to store instructions and/or data.

It may be clearly understood by a person skilled in the art that, for the purpose of convenient and brief description, for a detailed working process of the foregoing apparatus and unit, refer to a corresponding process in the foregoing method embodiment. Details are not described herein again.

Based on the foregoing embodiment, this application further provides a computer storage medium. The computer storage medium stores a computer program. When the computer program is executed by a computer, the computer is enabled to perform the method provided in the foregoing embodiment.

An embodiment of this application further provides a computer program product including instructions. When the computer program product runs on a computer, the computer is enabled to perform the method provided in the foregoing embodiment.

Embodiments of this application are described with reference to the flowcharts and/or block diagrams of the method, the device (system), and the computer program product according to embodiments of this application. It should be understood that instructions may be used to implement each process and/or each block in the flowcharts and/or the block diagrams and a combination of a process and/or a block in the flowcharts and/or the block diagrams. These instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specified function in one or more processes in the flowcharts and/or in one or more blocks in the block diagrams.

These computer program instructions may alternatively be stored in a computer-readable memory that can instruct a computer or another programmable data processing device to work in a specific manner, so that the instructions stored in the computer-readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing device, so that a series of operation steps are performed on the computer or the another programmable device, thereby generating computer-implemented processing. Therefore, the instructions executed on the computer or the another programmable device provide steps for implementing a specified function in one or more processes in the flowcharts and/or in one or more blocks in the block diagrams.

## Claims

1. A text editing method, comprising:
collecting, by an electronic device, voice signals in real time;
displaying, by the electronic device, a first interface, wherein the first interface comprises a first text and a second text, the first text is a text that is transcribed from a voice signal by artificial intelligence AI and on which semantic correction is completed by the AI, the second text is a text on which semantic correction is not completed by the AI, and collection time of a voice signal corresponding to the second text is later than collection time of the voice signal corresponding to the first text;
determining, by the electronic device, that an editing input focus exists in the first text or the second text; and
detecting, by the electronic device, an editing operation for the first text or the second text, and editing the first text or the second text in response to the editing operation.

2. The method according to claim 1, wherein the method further comprises:
detecting, by the electronic device, a first operation; and
displaying, by the electronic device, a second interface in response to the first operation, wherein the second interface comprises the second text, a virtual keyboard, and a recording bar, wherein
the second text is displayed below the recording bar, the second text is embedded and displayed in the recording bar, or the second text is displayed above the virtual keyboard.

3. The method according to claim 1, wherein the method further comprises:
displaying, by the electronic device, a third interface when detecting that the second text goes beyond the first interface, wherein the third interface comprises the first text, the second text, and a recording bar, wherein
the second text is displayed below the recording bar, the second text is embedded and displayed in the recording bar, or the second text is displayed at an upper layer of the first text.

4. The method according to claim 3, wherein the detecting, by the electronic device, that the second text goes beyond the first interface comprises:
detecting, by the electronic device, a second operation, wherein the second operation is used to enable the second text to go beyond the first interface; or
detecting, by the electronic device, that an editing input focus exists on the first interface and a last line of the second text is not on the first interface.

5. The method according to any one of claims 1 to 4, wherein the method further comprises:
detecting, by the electronic device, a third operation for the first text on the first interface, wherein the third operation is used to trigger generation of an editing input focus; and
maintaining, by the electronic device, a location of the first interface in response to the third operation, wherein the first interface comprises the editing input focus.

6. The method according to any one of claims 1 to 4, wherein when the editing input focus is not on the first interface, and the last line of the second text is displayed on the first interface, the method further comprises:
detecting, by the electronic device, a fourth operation, wherein the fourth operation is used to edit the first text; and
displaying, by the electronic device, a fourth interface in response to the fourth operation, wherein the fourth interface comprises the editing input focus.

7. The method according to any one of claims 1 to 4, wherein when the editing input focus is in the first text, the method further comprises:
detecting, by the electronic device, that the second text goes beyond the first interface, and detecting a fifth operation, wherein the fifth operation is used to enable the last line of the second text to be displayed on the first interface;
displaying, by the electronic device, the last line of the second text on the first interface in response to the fifth operation; and
displaying, by the electronic device, a fifth interface, wherein the fifth interface is an interface that is updated in a scrolling manner with the voice signals after the first interface.

8. The method according to any one of claims 1 to 7, wherein the determining, by the electronic device, that an editing input focus exists in the first text or the second text comprises:
determining, by the electronic device, that a cursor exists in the first text or the second text; or
detecting, by the electronic device, an operation of selecting the first text or the second text.

9. An electronic device, wherein the electronic device comprises a display, one or more processors, one or more memories, one or more sensors, a plurality of applications, and one or more computer programs, wherein
the one or more computer programs are stored in the one or more memories; the one or more computer programs comprise instructions; and when the instructions are invoked and executed by the one or more processors, the electronic device is enabled to perform the method according to any one of claims 1 to 8.

10. A computer-readable storage medium, wherein the computer-readable storage medium stores instructions; and when the instructions are run on an electronic device, the electronic device is enabled to perform the method according to any one of claims 1 to 8.

11. A computer program product comprising instructions, wherein when the computer program product runs on a computer, the computer is enabled to perform the method according to any one of claims 1 to 8.

12. A chip, wherein the chip is coupled to a memory, and is configured to read and execute program instructions stored in the memory, to implement the method according to any one of claims 1 to 8.
